# EUROPÄISCHE PATENTANMELDUNG

(11) **EP 0 575 742 A1**
(43) Veröffentlichungstag der Anmeldung: **29.12.1993**
(21) Anmeldenummer: 93107976.8
(22) Anmeldetag: 17.05.1993
(51) Int. Cl.: F01D 5/30

(54) **Laufrad einer Turbine**

(30) Priorität: 23.05.1992 DE 9207017 U
(71) Anmelder: ABB PATENT GmbH, D-68309 Mannheim (DE)
(72) Erfinder: Flöser, Bernhard, W-8508 Wendelstein 2 (DE); Ostermann, Gerd, W-8500 Nürnberg 50 (DE)
(74) Vertreter: Rupprecht, Klaus, Dipl.-Ing.

(57) **Zusammenfassung**

Die Erfindung betrifft das Laufrad einer Turbine mit Laufschaufeln (1) aus gezogenem Profilmaterial, die mit mindestens einem Ende in ein Halteblech eingesetzt sind, das mit Profilausschnitten (6) versehen ist. Die Laufschaufeln (1) sind mit dem Halteblech durch Einwirken eines Strahls hoher Leistungsdichte, vorzugsweise durch Elektronenstrahlschweißung, am Laufrad befestigt. Zur Erzielung einer sicheren Schweißverbindung und einer besseren Abdichtung zum Turbinengehäuse hin, sind die Laufschaufeln (1) in zwei als Halteblech dienende Halteringe (2, 3) eingesetzt, von denen ein innerer Haltering (3) jeweils das eine und ein äußerer Haltering (2) jeweils das andere Ende der Laufschaufeln (1) erfaßt. Eine Fixierung erfolgt durch eine Haltevorrichtung oder eine Heftschweißung so, daß ein Schaufelring (1 bis 3) entsteht, der innen und außen überdreht werden kann. Nach einem Aufschrumpfen auf eine Laufscheibe (4) durch Erwärmung und anschließende Abkühlung wird der Schaufelring (1 bis 3) mit einem warm aufgeschrumpften Deckring (5) versehen und sowohl mit diesem als auch mit der Laufscheibe (4) verschweißt.

## Beschreibung

Die Erfindung betrifft ein Turbinenlaufrad nach dem Oberbegriff des Anspruchs 1.

Das Laufrad einer Turbine und insbesondere seine Schaufeln unterliegen starken Beanspruchungen, die sich aus den hohen Temperaturen, den hohen Umfangsgeschwindigkeiten und den gegebenenfalls raschen Lastwechseln ergeben. Bei Dampfturbinen werden die Laufschaufeln an der Laufscheibe gewöhnlich mit Hilfe von Schaufelfüßen befestigt, die T- oder tannenbaumförmig ausgebildet sind und in entsprechend geformte axial und radial verlaufende Nuten der Laufscheibe eingesetzt werden. Die Schaufelfüße und die dazugehörigen Aufnahmenuten müssen mit sehr hoher Genauigkeit maschinell bearbeitet werden, was in Anbetracht der komplizierten Form relativ schwierig ist und somit hohe Herstellungskosten verursacht.

Aus der DE-OS 1 565 786 ist bereits ein Verfahren zum Verschweißen von Metallteilen mit unterschiedlichem Querschnitt bekannt. Bei diesem auch bei Turbinenlaufrädern angewandten Verfahren wird auf die zur Verbindung durch Elektronenstrahlschweißung vorgesehene Stelle einer Laufscheibe ein mit Aussparungen versehenes Blech gelegt und angedrückt und dann die Laufschaufel in die ihrem Querschnitt entsprechende Aussparung bis zum satten Aufliegen eingeführt. Danach können alle Metallteile nach Art einer Stumpfschweißung durch Einwirken eines Elektronenstrahles parallel zur Berührungsfläche der Metallteile miteinander verbunden werden.

Bei den in der beschriebenen Weise hergestellten Laufrädern sind die Laufschaufeln nur einseitig an der Laufscheibe befestigt, und das Anschweißen ist dadurch erschwert, daß die Schaufeln mit ihrer Stirnfläche, mit der sie an der Laufscheibe anliegen, sich auch deren Krümmung anpassen müssen. Das bedingt, daß die Stirnflächen zylinderförmig konkav ausgearbeitet werden müssen, damit zwischen der Laufscheibe und der Schaufel ein gleichmäßig enger Spalt entsteht.

Aufgabe der Erfindung ist es, ein Laufrad zu schaffen, bei dem die genannten Schwierigkeiten vermieden werden, das eine sichere Schweißverbindung ermöglicht und eine gute Abdichtung im Außenbereich zum Turbinengehäuse hin gewährleistet.

Diese Aufgabe wird durch die im Anspruch 1 gekennzeichneten Merkmale gelöst.

Zweckmäßige Ausgestaltungen und Weiterbildungen des Erfindungsgegenstandes sind in den Unteransprüchen genannt.

Ein wesentlicher Vorteil der Erfindung ist es, daß die Laufschaufeln an ihren beiden freien Enden von einem inneren und einem äußeren Haltering gehalten sind, und der hierdurch entstehende Schaufelring als Fertigungszwischenstufe eine selbständige Einheit bildet, die innen und außen überdreht werden kann, so daß sich hierdurch automatisch eine Anpassung der Stirnflächen an den jeweiligen Schaufelenden entsprechend der vorgegebenen Rundung ergibt. Der so erstellte Schaufelring kann in einfacher Weise auf die zugehörige Laufscheibe aufgeschrumpft werden und ein nach dem Erkalten anschließend aufgeschrumpfter Deckring sorgt für die geforderte gute Abdichtung zum Gehäuse hin.

Eine zweckmäßige Weiterbildung des Erfindungsgegenstandes sieht vor, daß nach dem durch das Aufschrumpfen bereits erfolgten Fixieren der Teile des Laufrades der Schaufelring nunmehr einerseits am Deckring und andererseits an der Laufscheibe stumpf von mindestens zwei Seiten aus angeschweißt werden kann und zur Vermeidung von Wurzelfehlern beide Schweißnähte in einer mittig liegenden Nahtaustrittsnut enden.

Weiterhin ist es zweckmäßig, die Profilausschnitte in den aus Bandmaterial bestehenden Halteringen, vor ihrem Umbiegen in eine Ringform, auszustanzen. Alternativ hierzu können die Profilausschnitte auch auf eine andere Weise, z. B. durch Laserschneiden oder Funkenerosion im gebogenen Zustand ohne Konturverzerrung, hergestellt werden. Bei Anwendung derartiger Schneidverfahren können dickere Bleche für die Halteringe verwendet werden, so daß ein stabilerer Schaufelring entsteht, der sich leichter beidseitig überdrehen läßt. Bei gestanzten Blechen kann man Blechdicken von etwa 3 mm nicht wesentlich überschreiten.

Obwohl es durch die gute Bündelung des Elektronenstrahls gelingt, die hohe Temperaturänderung im Bereich der Schweißnaht auf einen schmalen Raum zu konzentrieren, ist es dennoch von Vorteil, zur Wärmeableitung andrückbare Wärmeabgleitringe zu verwenden. Im Anschluß an den Schweißvorgang wird zum Abbau von Materialspannungen das Laufrad noch einer Wärmebehandlung unterzogen und kann dann anschließend fertiggedreht werden.

Ein Ausführungsbeispiel der Erfindung ist in den Zeichnungen dargestellt und wird im folgenden näher beschrieben. Es zeigen:
- Fig. 1: die Einzelteile des erfindungsgemäßen Laufrades in einer Explosionsdarstellung,
- Fig. 2: die Anordnung der Einzelteile im fertiggedrehten und geschweißten Zustand,
- Fig. 3: die Anordnung der Wärmeableitringsegmente.

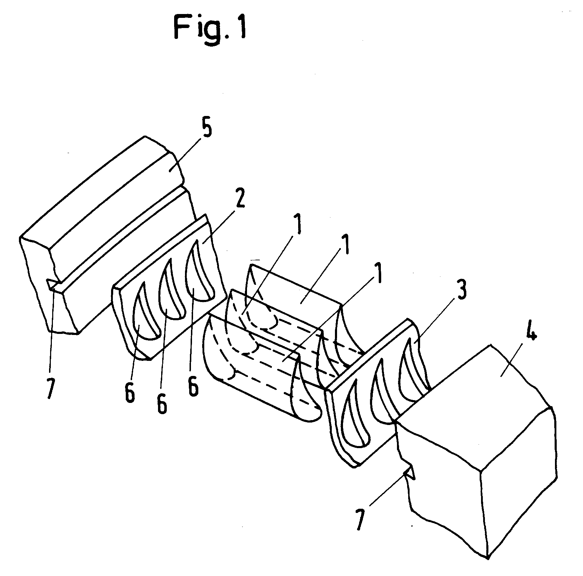

Wie die in Fig. 1 segmentartig aus einem Turbinenlaufrad herausgeschnitten Teile erkennen lassen, besteht das Laufrad aus Laufschaufeln 1, einem äußeren Haltering 2, einem inneren Haltering 3, einer Laufscheibe 4 und einem Deckring 5. Bei den Laufschaufeln 1 handelt es sich um Abschnitte eines gezogenen Profilstabes, also um entsprechend einfach hergestellte Teile, die mit der Laufscheibe 4 einerseits und mit dem Deckring 5 andererseits durch ein Schweißverbindung vereinigt werden sollen. Als Fertigungszwischenstufe wird hierzu aus den Laufschaufeln 1, dem inneren Haltering und dem äußeren Haltering 2 ein Schaufelring 1 bis 3 gebildet. Die aus Bandmaterial erstellten Halteringe 2, 3 werden hierzu vor dem Umbiegen mit Profilausschnitten 6 versehen, die dem Querschnitt der Laufschaufeln 1 entsprechen. Somit ist es möglich, die Laufschaufeln 1 beidseitig in die entsprechenden Profilausschnitte 6 einzustecken und in dieser Lage zu fixieren. Alternativ kann zum Fixieren eine Vorrichtung verwendet werden oder der Schaufelring wird durch Heftschweißungen zusammengehalten.

Der auf diese Weise gebildete Schaufelring 1 bis 3 kann sowohl innen wie auch außen überdreht werden, so daß eine glatte Oberfläche entsteht, die ein spaltfreies Anliegen sowohl an der Laufscheibe 4 als auch am Deckring 5 ermöglicht.

Eine gute Lagefixierung des Schaufelrings 1 bis 3 auf der Laufscheibe 4 wird durch seine Erwärmung und anschließendes Aufschrumpfen auf der Laufscheibe erreicht. Auf dieses Gebilde kann dann nach dessen Erkalten der Deckring 5 ebenfalls nach Erwärmung aufgeschrumpft werden. Nunmehr kann mit einem Strahl hoher Leistungsdichte, vorzugsweise mit einem Elektronenstrahl, die Stoßfuge zwischen der Laufschaufel 1 mit dem inneren Haltering 3 und der Laufscheibe 4 einerseits sowie die Stoßfuge zwischen der Laufschaufel 1 mit dem äußeren Haltering 2 und dem Deckring 5 andererseits zur Verschweißung durchstrahlt werden.

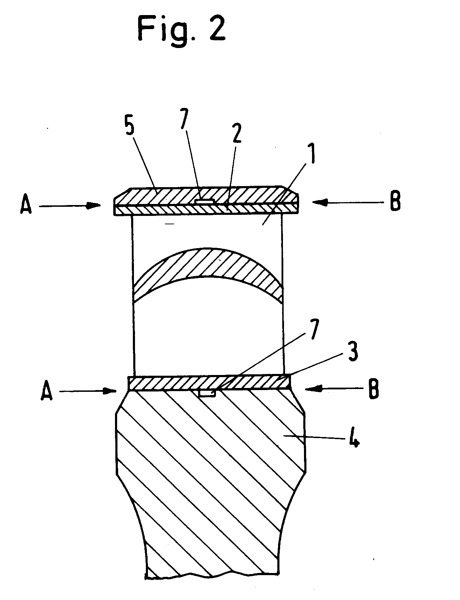

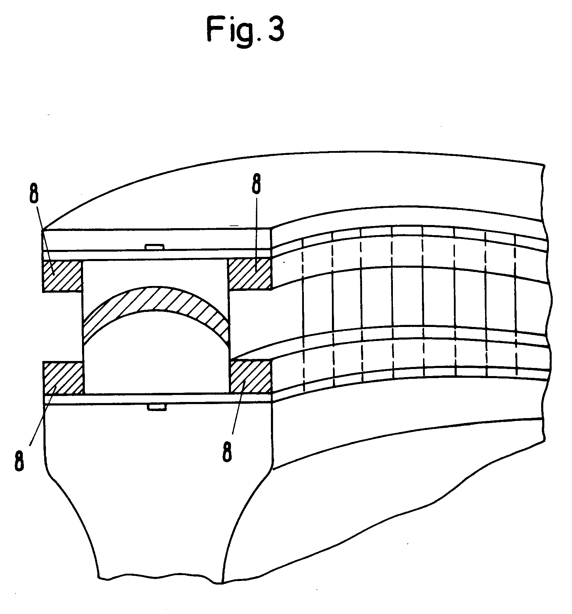

Wie Figur 2 zeigt, erfolgt die Durchstrahlung der Stoßfuge zweiseitig durch Elektronenstrahlen A und B und zwar jeweils bis zur Mitte, wo eine Nahtaustrittsnut 7 angeordnet ist. Diese dient dazu Wurzelfehler, die beim Ausgasen an der Schweißnaht entstehen können, zu vermeiden. Um einen übermäßigen Wärmestau an den im Bereich der Schweißnaht liegenden Teilen zu vermeiden, ist es zweckmäßig, wie in Fig. 3 dargestellt, mit geteilten Wärmeableitringen 8 zu arbeiten, die auf beiden Seiten von innen gegen die beiden Halteringe gedrückt werden, um eine gute Wärmeableitung zu gewährleisten, damit keine übermäßige Erhitzung der Außenkanten der beiden Halteringe entsteht.

## Patentansprüche

1. Laufrad einer Turbine, insbesondere einer Dampfturbine, mit Laufschaufeln (1) aus gezogenem Profilmaterial, die mit mindestens einem Ende in ein Halteblech eingesetzt sind, das mit Profilausschnitten (6) versehen ist, die dem Querschnitt der Laufschaufeln (1) entsprechen, und die Laufschaufeln (1) mit dem Halteblech durch Einwirken eines Strahls hoher Leistungsdichte, vorzugsweise durch Elektronenstrahlschweißung, am Laufrad befestigt sind, **dadurch gekennzeichnet**, daß die Laufschaufeln (1) in zwei als Halteblech dienende Halteringe (2, 3) eingesetzt sind, von denen ein innerer Haltering (3) jeweils das eine und ein äußerer Haltering (2) jeweils das andere Ende der Laufschaufeln (1) erfaßt und deren Fixierung durch eine Haltevorrichtung oder eine Heftschweißung so erfolgt, daß ein Schaufelring (1 bis 3) entsteht, der innen und außen überdreht werden kann und der Schaufelring (1 bis 3) nach einem Aufschrumpfen auf eine Laufscheibe (4) durch Erwärmung und anschließende Abkühlung mit einem warm aufgeschrumpften Deckring (5) versehen und sowohl mit diesem als auch mit der Laufscheibe (4) verschweißt ist.

2. Laufrad nach Anspruch 1, dadurch gekennzeichnet, daß der Schaufelring (1 bis 3) sowohl am Deckring (5) als auch auf der Laufscheibe (4) stumpf von mindestens zwei Seiten aus aufgeschweißt ist und mittig zwischen diesen beiden Seiten eine Nahtaustrittsnut (7) verläuft.

3. Laufrad nach einem der vorhergehenden Ansprüche, dadurch gekennzeichnet, daß die Profilausschnitte (6) in dem aus Bandmaterial bestehenden Halteringen (2, 3) im umgebogenen Zustand ausgestanzt werden.

4. Laufrad nach einem der Ansprüche 1 oder 2, dadurch gekennzeichnet, daß die Profilausschnitte (6) in dem aus Bandmaterial bestehenden Halteringen (2, 3) durch Laserschneiden oder Funkenerosion erstellt werden.

5. Laufrad nach einem der vorhergehenden Ansprüche, dadurch gekennzeichnet, daß es sich um ein nach dem Schweißvorgang und einer diesem folgenden Wärmebehandlung fertiggedrehten Teil handelt.
